# EUROPEAN PATENT APPLICATION

(11) **EP 3 643 733 A1**
(43) Date of publication of application: **29.04.2020**
(21) Application number: 19202893.4
(22) Date of filing: 14.10.2019
(51) Int. Cl.: C08G 18/79, C08G 18/80

(54) **BLOCKING AGENTS FOR ISOCYANATES**

(30) Priority: 24.10.2018 EP 18202200
(71) Applicant: BASF SE, 67056 Ludwigshafen am Rhein (DE)
(72) Inventor: Lucas, Frederic, 67056 Ludwigshafen (DE); Ernst, Martin, 67056 Ludwigshafen (DE); Zipfel, Hannes Ferdinand, 67056 Ludwigshafen (DE); Panchenko, Alexander, 67056 Ludwigshafen (DE)
(74) Representative: BASF IP Association

(57) **Abstract**

Use of a secondary amine of formula I

R1-NH-R2

wherein R1 represents a branched alkyl group with 3 to 6 carbon atoms and R2 represents a hydrocarbon group comprising one or two ether groups
as blocking agent for compounds with at least one isocyanate group, hereinafter shortly referred to as isocyanates.

## Description

The present invention relates to the use of a secondary amine of formula I

R¹-NH-R²

wherein R¹ represents a branched alkyl group with 3 to 6 carbon atoms and R² represents a hydrocarbon group comprising one or two ether groups
as blocking agent for compounds with at least one isocyanate group, hereinafter shortly referred to as isocyanates.

Compositions comprising compounds with isocyanate groups and compounds that are reactive with isocyanate groups, such as hydroxy or amino compounds, are used as coating materials, inks, sealants or adhesives.

As isocyanate groups are very reactive, the isocyanate compounds and the compounds reactive with isocyanate must be kept separate and may be mixed not earlier but shortly before the application thereof. Such compositions are known as 2K (two component) compositions.

Blocked isocyanates are used for the preparation of 1K (one component) compositions. Compositions of blocked isocyanates and compounds reactive with isocyanates are storage stable at moderate temperatures. Reaction of the components of the 1K compositions occurs at high temperatures during the application.

Blocking agents that are used for the preparation of blocked isocyanates should easily react with isocyanate and result in blocked isocyanates with long term storage stability in the presence of compounds with hydroxy or amino groups. On the other hand, the blocked isocyanates should still have a sufficient reactivity at higher temperature. Notably, the curing temperature for compositions comprising blocked isocyanates and compound with hydroxy or amino groups should be as low as possible to save energy and facilitate application processes.

Compounds with hydroxy or amino groups are known as blocking agents. In EP-A 096210 secondary amino compounds are disclosed for the preparation of blocked isocyanates. The use of further secondary amino compounds as blocking agents is known from Hermann Bach, Christoph Gürtler and Stephan Nowak, European Coating Journal, 2004, issue 3, pages 22, 24 and 26-27 (Coden: ECJOEF, ISSN: 0930-3847).

It was an object of this invention to provide blocking agents which are useful to prepare blocked isocyanates to be used in 1K compositions. The 1K compositions should have long term stability at moderate temperatures below 50°. On the other hand, the temperature at which quick and complete curing occurs should not be too high. Accordingly, the use of specific secondary amines as blocking agents for isocyanates, blocked isocyanates and 1K compositions comprising such blocked isocyanates have been found.

### To the blocking agents

The blocking agents used are of formula I

R¹-NH-R²

wherein R¹ represents a branched alkyl group with 3 to 6 carbon atoms and R² represents a hydrocarbon group comprising one or two ether groups.

Preferably, R¹ represents a tertiary butyl or an isopropyl group, notably a tertiary butyl group.

R² does preferably not comprise any other atoms than carbon, hydrogen and oxygen in the form of ether groups.

R² may be an open chain hydrocarbon group, a cyclic hydrocarbon group or a combination of both, such as open chain hydrocarbon groups substituted by cyclic hydrocarbon groups or as cyclic hydrocarbon groups substituted by aliphatic groups, notably alkyl groups.

An ether group is an oxygen atom bonded to two carbon atoms (C-O-C). In case of combinations of open chain and cyclic hydrocarbon groups, the ether groups may part of the open chain hydrocarbon or of the cyclic hydrocarbon.

The blocking agent of formula I have preferably a molecular weight of at maximum 500 g/mol, more preferably of at maximum 300 g/mol and most preferably of at maximum 200 g/mol.

Particularly preferred blocking agents have molecular weights of 45 to 200 g/mol.

In a preferred embodiment of the invention, R² is a hydrocarbon group comprising a ring system with one or two ether groups or is a non-cyclic aliphatic group with one or two ether groups.

In a preferred embodiment of the invention, R² is a hydrocarbon group comprising a ring system with one ether group or is a non-cyclic aliphatic group with one ether group.

In a more preferred embodiment of the invention, R² is a group of formula II 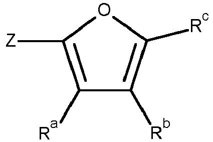 wherein R^{a} to R^{c} represent hydrogen or a C1- to C4-alkyl group
or of formula III 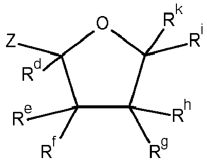
wherein R^{d} to R^{k} represent hydrogen or a C1- to C4-alkyl group
and wherein Z in both formulas II and III represents an organic group with 1 to 4 carbon atoms which is bonded to the nitrogen atom in formula I
or R² is a group of formula IV

   R³⁻O-CH₂CHR⁴-

   wherein R³ represents a C1 to C4 alkyl group and R⁴ represents hydrogen or a C1 to C4 alkyl group.

Preferably, at least two of R^{a} to R^{c} in formula II represent hydrogen and at least 5 of R^{d} to R^{k} in formula III represent hydrogen.

Most preferably, all of R^{a} to R^{c} represent hydrogen and all of R^{d} to R^{k} represent hydrogen.

Preferably, Z is an alkylene group with 1 to 4 carbon atoms.

Most preferably, Z is a methylene group.

A preferred blocking agent with R² being a group of formula IV is 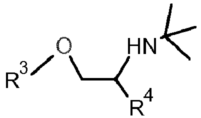 wherein R³ and R⁴ have the meaning above.

Particularly preferred blocking agents are
N-(furan-2-ylmethyl)-2-methylpropane-2-amine which has the formula 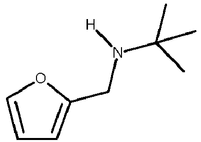 2-methyl-N-((tetrahydrofuran-2-yl)methyl)propane-2-amine which has the formula 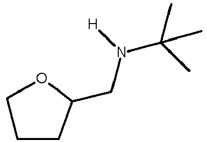 N-(2-methoxyethyl)-2-methylpropan-2-amine of formula 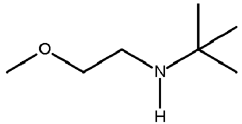 or N-(tert-butyl)-1-methoxypropan-2-amine of formula

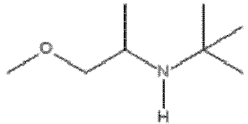

Most preferred blocking agents are
N-(furan-2-ylmethyl)-2-methylpropane-2-amine,
2-methyl-N-((tetrahydrofuran-2-yl)methyl)propane-2-amine and
N-(tert-butyl)-1-methoxypropan-2-amine.

Blocking agents of formula I are commercially available. They may be synthesized, for example, by reductive amination of corresponding aldehydes with primary amines of formula R¹-NH₂.

### To the isocyanates:

Compounds with at least one isocyanate group are herein shortly referred to as isocyanates.

Compounds with at least two isocyanate group are herein shortly referred to as polyisocyanates.

Isocyanates are preferably polyisocyanates, notably diisocyanates and oligomers of diisocyanates.

Preferred diisocyanates are diisocyanates of formula X(NCO)₂, where X is an aliphatic hydrocarbon radical having 4 to 12 carbon atoms, a cycloaliphatic or aromatic hydrocarbon radical having 6 to 15 carbon atoms, or an araliphatic hydrocarbon radical having 7 to 15 carbon atoms. Examples of such diisocyanates are tetramethylene diisocyanate, hexamethylene diisocyanate (HDI), dodecamethylene diisocyanate, 1,4-diisocyanatocyclohexane, 1-isocyanato-3,5,5-trimethyl-5-isocyanatomethylcyclohexane (IPDI), 2,2-bis(4-isocyanatocyclohexyl)-propane, trime-thylhexane diisocyanate, 1,4-diisocyanatobenzene, 2,4-diisocyanatotoluene, 2,6-diisocyanatotoluene (TDI), 4,4'-diisocyanato-diphenylmethane, 2,4'-diisocyanatodiphenylmethane (MDI), p-xylylene diisocyanate, tetramethylxylylene diisocyanate (TMXDI), the isomers of bis(4-isocyanatocyclohexyl)methane (HMDI), pentamethylene diisocyanate (PDI) such as any mixtures of these compounds.

Diisocyanates include dimers of diisocyanates, notably dimers of the compounds listed above; such dimers are specifically uretdiones or allophanates.

Further polyisocyanates are compounds obtained by trimerization of diisocyanates, such as isocyanurates or iminooxadiazindione and trimerization products with more than one isocyanurate ring system.

Further polyisocyanates are also biurets.

Further polyisocyanates are also oligomers that are obtained by reacting diisocyanates with polyols, notably polyols with 2 to 5 hydroxy groups or polyamines with primary or secondary amino groups, notably polyamines with 2 to 5 primary or secondary amino groups. The diisocyanates are used in molar excess, so that the desired number of isocyanate groups remains when the hydroxy, respectively amino groups are consumed in the reaction.

Further isocyanates are compounds with one isocyanate group - hereinafter referred to as monoisocyanate. Monoisocyanates are used to limit the molecular weight of the obtained polymer.

Hence, monoisocyanates may be used optionally and - if used - they are preferably used in low amounts, only.

In a preferred embodiment, the isocyanates are aliphatic compounds.

### Preparation of the blocked isocyanates

The blocked isocyanates may be prepared by reacting the isocyanate with the blocking agent at elevated temperature. The reaction of secondary amino groups with isocyanate groups is a well-known addition reaction which results in the formation of urea groups.

The blocking agent may be used in molar excess or in molar deficit. In case of molar deficit some unblocked isocyanate groups will remain.

Preferably, the blocking agent is used in an amount of at least 0.8 mols of the blocking agent per 1 mol of isocyanate groups.

More preferably, the blocking agent is used in an amount of at least 1 mol of the blocking agent per 1 mol of isocyanate groups.

Preferably, the blocking agent is used in an amount of at maximum 1.2 mol, more preferably of at maximum 1.1 mol, respectively at maximum 1.02 mol of the blocking agent per 1 mol of isocyanate groups to avoid high amounts of unreacted blocking agents in the product mixture.

The reaction of the blocking agent with the isocyanates may be performed in presence of a solvent. A solvent may be used, for example, if the isocyanate is solid or has a high viscosity at the temperature of the reaction.

The reaction is preferably performed at 50 to 150°C, more preferably at 60 to 100°C under normal pressure.

Preferably, the reaction is performed in the presence of an inert gas, which is notably nitrogen.

The reaction is preferably performed until 90 %, more preferably 98 %, most preferably 100 % of the isocyanate groups are blocked, in other words are masked with the blocking agent and have hence been transformed into urea groups.

Any solvent used may be removed from the product mixture, for example by distillation. Often the solvent may remain in the mixture as it will be removed during the later application of the blocked isocyanate obtained.

### To the 1K compositions

The blocked isocyanates are preferably used for the preparation of 1K compositions.

1K compositions are compositions comprising the blocked isocyanates and, in addition, at least one compound which is reactive with isocyanate groups, which are compounds with hydroxy groups or primary or secondary amino groups or mercapatane groups.

To the compounds that are reactive with isocyanate groups.

In a preferred embodiment of the invention, at least 50 mol%, in particular at least 80 mol %, most preferably at least 95 mol % of all compounds that react with isocyanates are compounds with at least two hydroxy groups. The obtained polymer is a polyurethane.

In a further preferred embodiment of the invention, at least 50 mol%, in particular at least 80 mol %, most preferably at least 95 mol % of all compounds that react with isocyanates are compounds with at least two amino groups, selected from primary and secondary amino groups. The obtained polymer is a polyurea.

Compounds with at least two hydroxy groups are preferably polyetherpolyols, polyesterpolyols, polymers with at least two hydroxy groups which are obtainable by radical polymerization of ethylenically unsaturated compounds herein referred to as monomers or hydrocarbons with at least two hydroxy groups.

Preferred polyesterpolyols have two to eight, preferably two to five hydroxy groups, more preferably two or three, in particular two hydroxy groups and are obtainable by reacting polyols, which include notably diols, with polycarboxylic acids which include notably dicarboxylic acids.

The polycarboxylic acids can be aliphatic, cycloaliphatic, araliphatic, aromatic or heterocyclic and can if appropriate be substituted, by halogen atoms for example, and/or unsaturated. Examples thereof include the following: suberic acid, azelaic acid, phthalic acid, isophthalic acid, phthalic anhydride, tetrahydrophthalic anhydride, hexahydrophthalic acid, hexahydrophthalic anhydride, tetrachlorophthalic anhydride, endomethylenetetrahydrophthalic anhydride, glutaric anhydride, maleic acid, maleic anhydride, fumaric acid, and dimeric fatty acids. Preferred dicarboxylic acids are those of the formula HOOC-(CH₂)_{y}-COOH, where y is a number from 1 to 20, preferably an even number from 2 to 20, examples being succinic acid, adipic acid, sebacic acid, and dodecanedicarboxylic acid.

Examples of suitable polyols include ethylene glycol, propane-1,2- diol, propane-1,3-diol, butane-1,3-diol, butene-1,4-diol, pentane-1,5-diol, neopentyl glycol, bis (hydroxymethyl)cyclohexanes such as 1,4-bis(hydroxymethyl)cyclohexane, 2-methylpropane-1,3-diol, methylpentanediols, and diethylene glycol, triethylene glycol, tetraethylene glycol, polyethylene glycol, dipropylene glycol, polypropylene glycol, and dibutylene glycol and polybutylene glycols. Preferred polyols are those of the formula HO-(CH2)x-OH, where x is a number from 1 to 20, preferably an even number from 2 to 20. Examples of such include ethylene glycol, butane-1,4-diol, hexane-1,6-diol, octane-1,8-diol, and dodecane-1,12-diol. Preference is also given to neopentyl glycol.

The number-average molecular weight Mn of the polyesterpolyol is preferably at least 500 g/mol, more preferably at least 700 g/mol. The upper limit of the molecular weight Mₙ is preferably 30 000 g/mol, more preferably 10 000 g/mol, very preferably 4000 g/mol. In a preferred embodiment, the polyesterpolyol has a molecular weight Mₙ being from 500 to 4000, more particularly from 700 to 2000 g/mol. The polydispersity M_{w}/Mₙ is preferably 1.1 - 50, more preferably less than or equal to 5, more particularly less than 3.5.

Preferred polyetherpolyols have two to eight hydroxy groups, preferably two to five hydroxy groups, most preferably two hydroxy groups and are obtainable in particular by polymerizing ethylene oxide, propylene oxide, butylene oxide, tetrahydrofuran, styrene oxide or epichlorohydrin with itself, in the presence of a catalyst, which is, for example, BF3 and a starter component containing reactive hydrogen atoms, such as alcohols or amines, examples being water, ethylene glycol, propane-1,2-diol, propane-1,3-diol, 1,2-bis(4-hydroxydiphenyl)propane, and aniline. A preferred polyetherpolyol is polytetrahydrofuran with a molecular weight of from 240 to 5000, and notably of from 500 to 4500.

A preferred polymer with at least two hydroxy groups is a polymer obtained by polymerization of acrylic or methacrylic compounds (herein referred to as (meth)acrylics) and optionally further monomers as e.g. styrene, whereby at least 50 mol %, more preferably at least 80 mol % of all monomers are (meth)acrylics. Such a polymer is hereinafter referred to as poly(meth)acrylate - polyol.

Poly(meth)acrylate - polyols are usually copolymers of (meth)acrylic esters, examples being C₁-C₂₀ alkyl (meth)acrylates, with hydroxyalkyl (meth)acrylates, examples being the mono(meth)acrylic esters of 1,2-propanediol, ethylene glycol, 1,3-propanediol, 1,4-butanediol or 1,6-hexanediol and optionally other monomers such as vinylaromatic monomers, in particular styrene, vinyl ester, in particular vinyl acetate, ethylenically unsaturated nitriles, aliphatic hydrocarbons having 2 to 8 C atoms and 1 or 2 double bonds, vinyl ethers, aliphatic hydrocarbons having 2 to 8 C atoms and 1 or 2 double bonds and α,β-unsaturated carboxylic acids and their anhydrides which includes, for example (meth)acrylic acid, maleic acid and maleic anhydride.

The poly(meth)acrylate - polyols preferably have a molecular weight Mₙ (number average), as determinable by gel permeation chromatography, of 500 to 50 000 D, more particularly 500 to 10 000 D or 500 to 5000 D. In one preferred embodiment, they have a molecular weight Mₙ of 800-2000 D. Such poly(meth)acrylate polyols are usually used for coating materials with low solids contents. Preferred poly(meth)acrylate - polyols have OH numbers, measured according to DIN 53240-2:2007-11, of 15-250 mg KOH/g resin solids, preferably 60-180 mg KOH/g, more preferably 80-160 mg KOH/g. The poly(meth)acrylate - polyols may additionally have an acid number to BS EN ISO 3682/BS 6782-3 of less than 100 mg KOH/g, preferably less than 30, and more preferably less than 20 mg KOH/g.

Preferred hydrocarbons with at least two hydroxy groups are notably the polyols listed above for the preparation of the polyesterpolyols.

Compounds with at least two amino groups, selected from primary or secondary amino groups may be low molecular compounds, oligomers or polymers.

Compounds with at least two amino groups may have, for example, a molecular weight of up to 500.000 g/mol. Preferred compounds with at least two amino groups have a molecular weight of up to 1000 g/mol. Most preferred are compounds having a molecular weight of from 60 g/mol to 500 g/mol.

Preferably, the compounds with at least two amino groups comprise 2 to 10 amino groups, preferably 2 or 3 amino groups and, in a most preferred embodiment the compound with at least two amino groups comprises 2 amino groups.

In a preferred embodiment at least one of the amino groups is a primary amino group.

In a most preferred embodiment the compound with at least two amino groups comprises two primary amino groups.

Suitable compounds with at least two amino groups are, for example,
alkylendiamines or alkylenpolyamines such as ethylenediamine, propylenediamine, butylene diamine, pentamethylene diamine, hexamethylene diamine, neopentanediamine, octamethylendiamine, 1,3 diaminopentane, 2-Methylpentan-1,5-diamin,
alkylendiamines or alkylenpolyamines comprising ether groups (polyetheramine)such as such polyglycoldiamine, oxypropylene diamine or polyoxypropylene diamine,
cycloaliphatic diamines, such as cyclohexyldiamines, for example 1,2 diaminocyclohexane, 1-methyl-2,4- diaminocyclohexane, 1-methyl-2,6-diaminocyclohexane or mixtures thereof, isophorone diamine, bis(4-aminocyclohexyl)methane,
1,3-bis(aminomethyl)cyclohexane, 1,4-bis(aminomethyl)cyclohexane, 2,5-bisaminomethyl tetrahydrofuran, 3,3'-Dimethyl-4,4'diamino-dicyclohexylmethane
aromatic diamines such as 1,2-phenylendiamine or 1,4 phenylendiamine, toluene diamines, 4,4' diamino-diphenylmethane, 4,4' diaminodiphenylsulfone, 2,5-bisaminomethyl furan or
amino compounds with primary and secondary amino groups such as N-aminoethylpiperazine, dialkylentriamines or polyalkylentriamines, for example diethylenetriamine or triethylenetetramine, dipropylene triamine, N,N-Bis-(3-aminopropyl)methylamine, fatty diamines
Compounds with only one functional group that react with isocyanate are used to limit the molecular weight of the obtained polymer. Hence, such compounds are used only optionally in the 1K composition and - if used- they are used in low amounts, only.

### To the 1K composition

Preferably, the 1K composition comprises compounds with blocked isocyanate groups and compounds that are reactive with isocyanate in an amount that the molar ratio of blocked isocyanate groups to isocyanate-reactive groups is from 0.5:1 to 2:1, preferably 0.7:1 to 1.3:1, more preferably 0.8:1 to 1.2:1, and especially 0.9:1 to 1.1:1.

The 1K composition may comprise further compounds besides isocyanate compounds and isocyanate-reactive compounds. Such further compounds are, in particular, solvents, catalysts, in particular, catalysts for the formation of urethane, respectively urea groups and additives such as UV stabilizers, thickeners, thixotropic agents, surface-active agents, viscosity modifiers, plasticizers or chelating agents, fillers, dyes and pigments, drying agents, antistatic agents, antioxidants or flame retardants.

Suitable organic solvents, are notably aromatic compounds including alkylated benzenes and naphthalenes, (cyclo)aliphatic hydrocarbons and mixtures thereof, chlorinated hydrocarbons, ketones, esters, alkoxylated alkyl alkanoates, ethers, and mixtures thereof.

Preferred solvents are n-butyl acetate, ethyl acetate, 1-methoxyprop-2-yl acetate, 2-methoxyethyl acetate, xylene and Solvesso® 100.

### The 1K compositions preferably is a composition which is liquid at 21°C.

The 1K composition of this invention may be used as coating composition, ink, sealant or adhesive.

The 1K composition is suitable in coatings applications as clearcoat, basecoat, topcoat, primer or surface materials, especially as clearcoat or topcoat materials.

The 1K composition may be applied to substrates such as wood, wood veneer, paper, cardboard, paperboard, textile, film, leather, nonwoven, plastics surfaces, glass, ceramic, mineral building materials, such as molded cement blocks and fiber-cement slabs, or metals, which in each case may optionally have been precoated or pretreated. Preference is given to wood, metals and plastics, which may optionally have been precoated or pretreated. Particularly preferred are metals and plastics.

Curing of the 1K composition occurs after the application of the 1K composition as coating composition, ink, sealant or adhesive.
The applied 1K composition may be cured by any method known to the skilled person.

Preferably curing occurs at elevated temperatures, notably to temperatures above the deblocking temperature of the blocked isocyanate. The deblocking temperature is the temperature at which the blocked isocyanate decomposes to the free isocyanate and the blocking agent. The deblocking temperature may be determined by DSC measurements as described in the examples. The deblocking temperature of the blocked isocyanates of this invention is preferably below 190°C and more preferably below 170°C, most preferably below 160°C (at normal pressure, 1 bar).

After curing, coated substrates, adhesive bonds, sealed cracks, printed substrates with good performance properties are obtained.

The secondary amines of formula I have high suitability as blocking agents for isocyanates. The blocked isocyanates may be used in 1K compositions with long term storage stability. The deblocking temperature of the blocked isocyanates is low so that curing of the 1K composition easily and completely occurs at moderate temperatures.

### Examples:

### Blocking agents

### Preparation of N-tert-butyl-1(furan-2-yl)methanimine

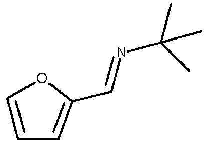

A flask was charged with furan-2-carbaldehyde (250 g, 2,60 mol), and tert-butylamine (209 g, 2,86 mol) was added dropwise at ambient temperature over the course of 2 h. The reaction mixture was stirred vigorously during addition and the temperature was kept below 40 °C. After complete addition the mixture was stirred for another 3 h. The aqueous layer was separated and discarded to obtain crude N-tert-butyl-1-(furan-2-yl)methanimine in 96% purity according to gas chromatography. The N-tert-butyl-1-(furan-2-yl)methanimine was used as starting material for the preparation of blocking agents 1 and 2.

### Preparation of N-(furan-2-ylmethyl)-2-methylpropan-2-amine shortly referred to as blocking agent 1

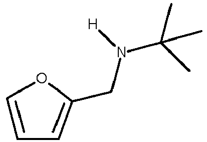

A flask was charged with a solution of crude N-tert-butyl-1-(furan-2-yl)methanimine (100 g, 652 mmol) in ethanol (600 g) and the mixture was cooled to 7 °C. NaBH4 (12.5 g, 330 mmol) was added in portions over the course of 4 h and the temperature was kept between 5 °C and 15 °C. After complete addition, the mixture was warmed to ambient temperature and stirred overnight. Water (400 mL) was added carefully and the aqueous mixture was extracted with MTBE (4 x 200 mL). The combined organic layers were dried over MgSO4, filtered and the solvent was removed under reduced pressure. The residue was distilled under reduced pressure to obtain N-tert-butyl-1-(furan-2-yl)methanimine (72 g, 71 %).

### Preparation of 2-methyl-N-((tetrahydrofuran-2-yl)methyl)propan-2-amine, shortly referred to as blocking agent 2

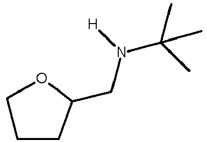

An autoclave is charged with crude N-tert-butyl-1-(furan-2-yl)methanimine (100 g, 652 mmol) and 10 g Raney Nickel (washed with THF to remove water). The autoclave is closed, pressurized with hydrogen to 150 bars and heated to 50 °C for 12 h. After 12 h, the temperature is raised to 100 °C and the reaction is continued for another 24 h. During the reaction, the mixture is heavily stirred and the pressure is kept at 150 bars by top-up of consumed hydrogen. After completion of the reaction, the autoclave is cooled to ambient temperature, depressurized and the reaction mixture is filtered. 2-methyl-N-((tetrahydrofuran-2-yl)methyl)propan-2-amine is obtained in 76% selectivity at 100 % conversion of the starting material according to gas chromatography. A sample of the product was obtained >98% purity by distillation under reduced pressure.

### N-(2-methoxyethyl)-2-methylpropan-2-amine shortly referred to as blocking agent 3

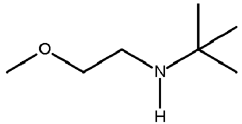

### N-(tert-butyl)-1-methoxypropan-2-amine shortly referred to as blocking agent 4

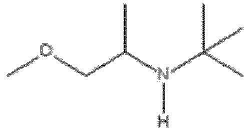

### Preparation of blocked isocyanates

### Comparison example 1:

### trimer of 1,6 hexamethylenediisocyanate (HDI)-trimer, blocked with diisopropylamine

A round bottomed flask was charged with 27,46g BASONAT® HI100 from BASF SE (polyisocyanate prepared by trimerizing some of the isocyanate groups of HDI, said polyisocyanate being composed substantially of tris(6-isocyanatohexyl) isocyanurate and its higher homologs, with an NCO content of 21.8%) and 42,61g n-butylacetate. The contents of the flask were then heated to 90°C under a nitrogen atmosphere. Consequently, 15,15 g diisopropylamine were added dropwise. The temperature is maintained at 90°C, until the free isocyanate content reached 0.0 % (app. 2 hours).

### Comparison example 2:

### trimer of HDI-trimer, blocked with tert-butylethylamine

A round bottomed flask was charged with 27,46g BASONAT® HI100 from BASF SE (polyisocyanate prepared by trimerizing some of the isocyanate groups of HDI, said polyisocyanate being composed substantially of tris(6-isocyanatohexyl) isocyanurate and its higher homologs, with an NCO content of 21.8%) and 42,64g n-butylacetate. The contents of the flask were then heated to 90°C under a nitrogen atmosphere. Consequently, 15,20 g N-tert-butyl-N-ethylamine were added dropwise. The temperature is maintained at 90°C, until the free isocyanate content reached 0.0 % (app. 2,5 hours).

### Comparison example 3:

### Trimer of HDI, blocked with tert-butylbenzylamine

A round bottomed flask was charged with 27,46g BASONAT® HI100 from BASF SE (polyisocyanate prepared by trimerizing some of the isocyanate groups of HDI, said polyisocyanate being composed substantially of tris(6-isocyanatohexyl) isocyanurate and its higher homologs, with an NCO content of 21.8%) and 51,91g n-butylacetate.

The contents of the flask were then heated to 90°C under a nitrogen atmosphere. Consequently, 24,45 g with tert-butylbenzylamine were added dropwise. The temperature is maintained at 90°C, until the free isocyanate content reached 0.0 % (app. 2,5 hours).

### Example 1:

### Trimer of HDI, blocked with blocking agent 1

A round bottomed flask was charged with 27,46g BASONAT® HI100 from BASF SE (polyisocyanate prepared by trimerizing some of the isocyanate groups of HDI, said polyisocyanate being composed substantially of tris(6-isocyanatohexyl) isocyanurate and its higher homologs, with an NCO content of 21.8%) and 50,56 g n-butylacetate. The contents of the flask were then heated to 90°C under a nitrogen atmosphere. Consequently, 23,10 g of blocking agent 1 were added dropwise. The temperature is maintained at 90°C, until the free isocyanate content reached 0.0 % (app. 2 hours).

### Example 2:

### Trimer of HDI, blocked with blocking agent 2

A round bottomed flask was charged with 27,46g BASONAT® HI100 from BASF SE (polyisocyanate prepared by trimerizing some of the isocyanate groups of HDI, said polyisocyanate being composed substantially of tris(6-isocyanatohexyl) isocyanurate and its higher homologs, with an NCO content of 21.8%) and 51,01g n-butylacetate. The contents of the flask were then heated to 90°C under a nitrogen atmosphere. Consequently, 23,55 g of blocking agent 2 were added dropwise. The temperature is maintained at 90°C, until the free isocyanate content reached 0.0 % (app. 2 hours).

### Example 3

### Trimer of HDI, blocked with blocking agent 3

A round bottomed flask was charged with 27,46g BASONAT® HI100 from BASF SE (polyisocyanate prepared by trimerizing some of the isocyanate groups of HDI, said polyisocyanate being composed substantially of tris(6-isocyanatohexyl) isocyanurate and its higher homologs, with an NCO content of 21.8%) and 47,11g n-butylacetate. The contents of the flask were then heated to 90°C under a nitrogen atmosphere. Consequently, 19,65 g of blocking agent 3 were added dropwise. The temperature is maintained at 90°C, until the free isocyanate content reached 0.0 % (app. 3 hours).

### Example 4

### Trimer of HDI, blocked with blocking agent 4

A round bottomed flask was charged with 27,46g BASONAT® HI100 from BASF SE (polyisocyanate prepared by trimerizing some of the isocyanate groups of HDI, said polyisocyanate being composed substantially of tris(6-isocyanatohexyl) isocyanurate and its higher homologs, with an NCO content of 21.8%) and 49,21g n-butylacetate. The contents of the flask were then heated to 90°C under a nitrogen atmosphere. Consequently, 21,75 g of blocking agent 4 were added dropwise. The temperature is maintained at 90°C, until the free isocyanate content reached 0.0 % (app. 3 hours).

### Determination of the deblocking temperature

The deblocking temperature is the temperature at which the blocked isocyanate decomposes into the free, unblocked isocyanate and the blocking agent.

The deblocking temperature was determined by differential scanning calorimetry (DSC). The DSC apparatus used was DSC 204 F1 of Netzsch.

For each DSC run, 5 mg of the respective blocking agent were used. The DSC run was performed under nitrogen in a temperature range from 0 to 300°C and a heating rate of 10° C/minute. The temperature of the exothermic maximum corresponds to the deblocking temperature.

| Blocked isocyanate from | Deblocking agent | Deblocking temperature |
|---|---|---|
| Comparison example 1 | diisopropylamine | 190°C |
| Comparison example 2 | tert-butylethylamine | 170°C |
| Comparison example 3 | tert-butylbenzylamine | 170°C |
| Example 1 | blocking agent 1 | 150°C |
| Example 2 | blocking agent 2 | 140°C |
| Example 3 | blocking agent 3 | 160°C |
| Example 4 | blocking agent 4 | 130°C |

## Claims

1. Use of a secondary amine of formula I
R¹-NH-R²
wherein R¹ represents a branched alkyl group with 3 to 6 carbon atoms and R² represents a hydrocarbon group comprising one or two ether groups
as blocking agent for compounds with at least one isocyanate group, hereinafter shortly referred to as isocyanates.

2. Use according to claim 1, wherein R¹ is a tertiary butyl or an isopropyl group.

3. Use according to claim 1 or 2, wherein R² is a hydrocarbon group comprising a ring system with one or two ether groups or is a non-cyclic aliphatic group with one or two ether groups.

4. Use according to any of claims 1 to 3, wherein R² is a group of formula II 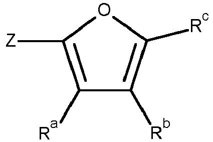 herein R^{a} to R^{c} represent hydrogen or a C1- to C4-alkyl group
or of formula III 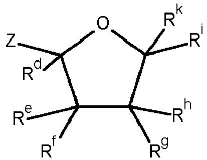
wherein R^{d} to R^{k} represent hydrogen or a C1- to C4-alkyl group
and wherein Z in both formulas II and III represents an organic group with 1 to 4 carbon atoms which is bonded to the nitrogen atom in formula I
or R² is a group of formula IV
R³-O-CH₂CHR⁴-
wherein R³ represents a C1 to C4 alkyl group and R⁴ represents hydrogen or a C1 to C4 alkyl group.

5. Use according to claim 4, wherein Z is a methylene group.

6. Use according to any of claims 1 to 5, wherein the blocking agent is N-(furan-2-ylmethyl)-2-methylpropane-2-amine of formula 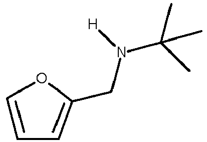 or 2-methyl-N-((tetrahydrofuran-2-yl)methyl)propane-2amine of formula 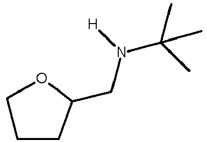 or N-(2-methoxyethyl)-2-methylpropan-2-amine of formula 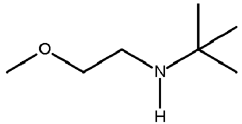 or N-(tert-butyl)-1-methoxypropan-2-amine of formula

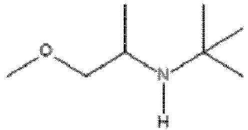

7. Use according to any of claims 1 to 6, wherein the isocyanates are compounds with at least two isocyanate groups, hereinafter shortly referred to as polyisocyanates.

8. Blocked isocyanates obtainable by reacting isocyanates with a blocking agent according to any of claims 1 to 7

9. Compositions comprising blocked isocyanates according to claim 8 and at least one compound with hydroxy groups or primary or secondary amino groups or mercaptane groups.

10. Use of compositions according to claim 9 as coating materials, inks, sealants or adhesives.
